# EUROPÄISCHE PATENTSCHRIFT

(11) **EP 2 670 974 B1**
(45) Veröffentlichungstag und Bekanntmachung des Hinweises auf die Patenterteilung: **13.09.2017**
(21) Anmeldenummer: 12702495.8
(22) Anmeldetag: 01.02.2012
(51) Int. Cl.: F02N 11/14, F02N 11/08

(54) **FREMDSTARTVORRICHTUNG FÜR EIN KRAFTFAHRZEUG**
JUMP START DEVICE FOR A MOTOR VEHICLE
DISPOSITIF D'ALLUMAGE COMMANDÉ POUR UN VÉHICULE À MOTEUR

(30) Priorität: 03.02.2011 DE 102011003565
(43) Veröffentlichungstag der Anmeldung: 11.12.2013
(73) Patentinhaber: Bayerische Motoren Werke Aktiengesellschaft, 80809 München (DE)
(72) Erfinder: PRÖBSTLE, Hartmut, 97082 Würzburg (DE); WITT, Holger, 82223 Eichenau (DE)
(86) Internationale Anmeldenummer: PCT/EP2012/051612
(87) Internationale Veröffentlichungsnummer: WO 2012/104324

(56) Entgegenhaltungen:
- DE-A1- 10 059 038
- DE-A1- 10 313 752
- US-B1- 6 396 240

## Beschreibung

Die Erfindung betrifft eine Fremdstartvorrichtung für ein Kraftfahrzeug, wobei das Kraftfahrzeug über ein Motorsteuergerät und einen Starter für einen Verbrennungsmotor verfügt, das Kraftfahrzeug mit mindestens zwei Teilbordnetzen, die über mindestens ein elektrisches Trennelement miteinander gekoppelt sind, und je Teilbordnetz mit mindestens einem wiederaufladbaren elektrischen Energiespeicher ausgestattet ist.

Üblicherweise ist das Bordnetz von Kraftfahrzeugen mit einer Starterbatterie ausgestattet, um den Motor mit einem Starter zu starten und Verbraucher bei mangelnder Deckung mit elektrischer Leistung durch den Generator mit elektrischer Leistung zu versorgen. Die Aufgaben der Starterbatterie gehen also über das bloße Starten des Motors hinaus, so dass die Starterbatterie in der Fahrzeugentwicklung als Bordnetzbatterie oder SLI-Batterie für Starting (Anlassen), Lighting (Licht) und Ignition (Zündung) bezeichnet wird. Kommt es zu einem Batterieausfall oder Batteriedefekt, kann das Fahrzeug fremdgestartet und/oder die Batterie nachgeladen werden. Sowohl zum Fremdstart als auch zum Nachladen wird eine externe Strom- und Spannungsquelle wie etwa ein Ladegerät oder die Bordnetzbatterie eines anderen Fahrzeugs (Spenderfahrzeug) mit dem der Batterie des Empfängerfahrzeugs galvanisch verbunden. Die elektrische Verbindung wird mit Überleitungskabeln hergestellt. Ein Überleitungskabelsatz besteht aus zwei isolierten Leitungen, die mit Klemmen oder Zangen abschließen, welche für die Größe von genormten Batteriepolen ausgelegt sind (siehe etwa Norm EN 50342-2 "Lead-acid starter batteries. Dimensions of batteries and marking of terminals." und Norm DIN 72553 "Starthilfekabel für Straßenfahrzeuge mit Verbrennungsmotor; Maße, Anforderungen, Prüfung"). Die Plusleitung des Kabelsatzes verbindet die positiven Potentiale, das bedeutet zum Beispiel die beiden Pluspole der von Empfänger- und Spenderbatterie oder den Pluspol der Empfängerbatterie mit dem Plus-Ausgang eines Ladegeräts, die Minusleitung stellt eine gemeinsame Masse her. Bei einem Fremdstart fließen hohe Ströme (nahe an den Bereich von Kiloampere), so dass die Leitungen des Kabelsatzes einen entsprechend hohen Leitungsquerschnitt aufweisen müssen. Bei vielen Fahrzeugmodellen sind die Batteriepole nicht frei zugänglich wie etwa beim Verbau im Kofferraum. In diesem Fall wird nicht der Pluspol der Batterie kontaktiert, sondern ein mit der Plusleitung der Batterie, also der direkt zum Pluspol der Batterie führenden Leitung, galvanisch verbundenes Terminal. Dieses Terminal wird als Fremdstartstützpunkt bezeichnet und ist ein für den Bestimmungszweck des Nachladens und Fremdstartens im Fahrzeug und/oder Fahrzeugbegleitbuch ausgewiesener und leicht von außen zugänglicher Anschluss. Er befindet sich meist im Bereich des Motorraums und ist nach dem Öffnen der Motorhaube frei zugänglich, um eine Ladezange anzuschließen. Ein verpolsicherer Fremdstartschaltkreis für ein Fahrzeug mit einer Starterbatterie ist beispielsweise im Stand der Technik in US 6 211 577 B1 beschrieben.

Moderne Kraftfahrzeuge mit einer Spannungslage des Bordnetzes von 12 Volt verfügen über eine Motor-Stopp-Start-Funktion, d.h. der Motor wird in geeigneten Fahrsituationen während des Fahrbetriebs abgestellt und nach kurzer Zeit wieder neu gestartet. Das Warten an einer roten Ampel oder an einem Bahnübergang können als Beispiele angeführt werden. Das Unterbinden des Motorlaufs bewirkt eine Treibstoffeinsparung. Aufgrund der im Vergleich zu Fahrzeugen ohne Stopp-Start-Funktion häufigeren Anzahl von Motorstarts und der Notwendigkeit, während der Abstellzeit des Motors bei Fahrbetrieb die elektrischen Verbraucher über die Batterie versorgen zu müssen, wird die Batterie des Fahrzeugs stark beansprucht. Deshalb sind Fahrzeuge mit Start-Stopp-Funktion oder auch Fahrzeuge mit hoher Grundstrombelastung wie Kommunal-oder Behördenfahrzeuge häufig mit einem zweiten Bordnetz ausgestattet, das über eine eigene Batterie verfügt, welche oft als Zustartbatterie bezeichnet wird. Das Teilbordnetz mit der Zustartbatterie ist vom Teilbordnetz mit der Hauptbatterie, welche auch als Basisbatterie bezeichnet wird, durch ein Batterietrennrelais und/oder einen Gleichstromwandler getrennt. Eine funktions- und kostenoptimierte Variante ist die Nutzung eines unidirektionalen Gleichstromwandlers ohne Batterietrennrelais. Der Gleichstromwandler wird vom Teilbordnetz mit der Hauptbatterie elektrisch versorgt und überträgt elektrische Leistung vom eingangsseitigen Basisbordnetz zum ausgangsseitigen Zustartbordnetz. Meist befindet sich im eingangsseitigen Bordnetz mit der Hauptbatterie das Motorsteuergerät und im ausgangsseitigen Bordnetz mit der Zustartbatterie der Starter. In der Schrift US 6 396 240 B1 ist für ein Fahrzeug mit zwei über einen Gleichstromwandler gekoppelten Bordnetzbatterien eine Fremdstarteinrichtung mit einer dritten Batterie beschrieben Die DE 101 19 985 A1 offenbart eine Vorrichtung zur Energieeinspeisung in ein Mehrspannungsbordnetz von einem Fremdladestützpunkt ausgehend über mindestens ein Schaltmittel. Es ist eine Aufgabe der Erfindung, eine verbesserte Fremdstartvorrichtung für ein Fahrzeug mit mindestens zwei Teilbordnetzen anzugeben.

Gelöst wird diese Aufgabe durch eine Fremdstartvorrichtung gemäß Anspruch 1. Vorteilhafte Ausführungsformen und Weiterbildungen der Erfindung ergeben sich aus den abhängigen Ansprüchen.

Erfindungsgemäß verfügen mindestens zwei der Teilbordnetze über einen Fremdstartstützpunkt. Die Fremdstartstützpunkte sind galvanisch voneinander getrennt.

Es ist ein Vorteil der Erfindung, dass die Energiespeicher in den jeweiligen Bordnetzen unabhängig voneinander von außen elektrisch zugänglich. Die externe Strom- und Spannungsversorgung aller Energiespeicher erfolgt jeweils direkt, d.h. es fällt keine elektrische Leistung an dem elektrischen Trennelement ab.

Nach einer Ausführungsform der Erfindung ist das elektrische Trennelement als Gleichstromwandler und/oder als Relais oder als Schalter ausgeführt.
Die Allgemeinheit wird nicht beschränkt, falls in der vorliegenden Beschreibung ein Gleichstromwandler betrachtet wird.

Gemäß einer Ausführungsform der Erfindung sind die Fremdstartstützpunkte mit einer äußeren Stromquelle über eine kabelgebundene Verbindung kontaktierbar, um die wiederaufladbaren elektrischen Energiespeicher zu laden.

Diese Ausführungsform hat zum Vorteil, dass alle Energiespeicher etwa im Falle einer Tiefentladung nach langer Standzeit zügig geladen werden können. Die Limitierung der von einem elektrischen Energiespeicher aufgenommenen elektrischen Leistung erfolgt durch die Ladungsaufnahmefähigkeit des Energiespeichers oder der Stromtragfähigkeit der äußeren Stromquelle bei einer bestimmten Ladespannung. Der Gleichstromwandler wirkt nicht limitierend.

Vorzugsweise weist die kabelgebundene mindestens zwei parallele Verzweigungen auf, um mindestens zwei der Energiespeicher mit dem gleichen elektrischen Potential zu laden.

An dieser Ausführungsform besonders vorteilhaft ist, dass mindestens zwei Energiespeicher mit einer äußeren Spannungsquelle ladbar sind.

Gemäß einer weiteren Variante der vorliegenden Erfindung sind mindestens zwei der Teilbordnetze über die Fremdstartstützpunkte mit einer äußeren Stromquelle elektrisch verbunden, um einen Fremdstart des Verbrennungsmotors durchzuführen.

Mit dieser Variante wird die Fremdstartfähigkeit des Kraftfahrzeugs mit einer äußeren Spannungsquelle insbesondere in dem Fall gewährleistet, dass alle Energiespeicher tiefentladen sind, das Motorsteuergerät in dem zum Gleichstromwandler eingangsseitig orientierten Teilbordnetz elektrisch versorgt wird und der Starter des Fahrzeugs in einem zum Gleichstromwandler ausgangsseitig orientierten zweiten Teilbordnetz versorgt wird.

Die Erfindung beruht auf den nachfolgend dargelegten Überlegungen:
Kraftfahrzeuge benötigen einen elektrischen Zugang zum Starten und Laden über eine externe Spannungsquelle oder eine externe Batterie bei Notfällen und bei Händler- oder Werkseinsätzen im Rahmen eines Fremdstartkonzepts.

Zukünftige Hybrid- und Plug-In-Hybrid-Fahrzeuge und Fahrzeuge mit Motor-Start-Stopp-Funktionalität verfügen über mehrere Batterien mit einer Spannungslage von 12 Volt, wobei das Basisbordnetz und der Starter von separaten Batterien in separaten Bordnetzen versorgt werden. Diese Bordnetze sind galvanisch getrennt, die elektrischen Kopplung erfolgt meist über einen unidirektionalen Gleichstromwandler, in selteneren Fällen über einen bidirektionalen Gleichstromwandler. Über einen weiteren Gleichstromsteller erfolgt gegebenenfalls die Anbindung an das Hochvolt-Bordnetz. Im Falle eines Fremdstarts ist ein elektrischer Zugang von außen derart vorzusehen, dass sowohl ein Ausfall der Basisbatterie als auch der Starterbatterie behoben wird.

Gegenwärtig verfügen Fahrzeuge über einen einzigen Fremdstartstützpunkt. Die externe Einspeisung elektrischer Leistung in mehrere Bordnetze mit einer Spannungslage von 12 Volt, etwa Basisbordnetz und Zustartbordnetz, ist mit dem Konzept eines zentralen Fremdstartpunkts nur unzureichend möglich.

Eine geeignete Maßnahme ist die Einführung eines zweiten Fremdstartstützpunktes, d.h. jede Batterie in jedem Teilbordnetz verfügt über einen Fremdstartstützpunkt. Bei zum Beispiel zwei Teilbordnetzen kann die Versorgung der Teilbordnetze von außen mit einer Spannungsquelle oder externen Batterie mit einem Y-förmigen Starterkabel erfolgen. Die Y-Förmigkeit drückt sich dadurch aus, dass die Plusleitung des Fremdstartkabels von der externen Quelle oder Batterie kommend eine Verzweigung in einen elektrischen Anschluss für jeden der Fremdstartstützpunkte aufweist. Bei einem Fremdstart sind beide Bordnetze des zu versorgenden Fahrzeugs gleichzeitig über eine einzige Fremdstartplusleitung, d.h. über eine einzige externe Spannungsquelle oder externe Batterie versorgbar.

Bei massegebundenen Teilbordnetzen ist die Verbindung der Massepunkte der Teilbordnetze nicht nötig und kann über ein gewöhnliches Fremdstartmassekabel mit einem Strang an einem zentralen Fahrzeugmassepunkt erfolgen.

Bei massegetrennten Teilbordnetzen kommt analog zur Fremdstartplusleitung ein Fremdstartmassekabel in Y-Förmigkeit zum Einsatz.

Diese Maßnahme bringt einige Vorteile mit sich. Es wird die Fremdstartfähigkeit von Fahrzeugen mit separierten Startbordnetzen sichergestellt. Beim Verbau im Produktionswerk, bei einem Händlereinsatz, etwa bei einem Reparaturfall, oder beim Nachladen durch den Endkunden ist die Energieversorgung aller Teilbordnetze gewährleistet. Diese leistet einen hohen Beitrag zur Vermeidung von Liegenbleibern und Gewährleistungskosten.

Im Folgenden wird anhand der beigefügten Zeichnungen ein bevorzugtes Ausführungsbeispiel der Erfindung beschrieben. Daraus ergeben sich weitere Details, bevorzugte Ausführungsformen und Weiterbildungen der Erfindung. Im Einzelnen zeigen schematisch
- Fig. 1:: Fremdstarteinrichtung für ein Kraftfahrzeug mit zwei Teilbordnetzen
- Fig. 2:: Fremdstarteinrichtung für ein Kraftfahrzeug mit drei Teilbordnetzen

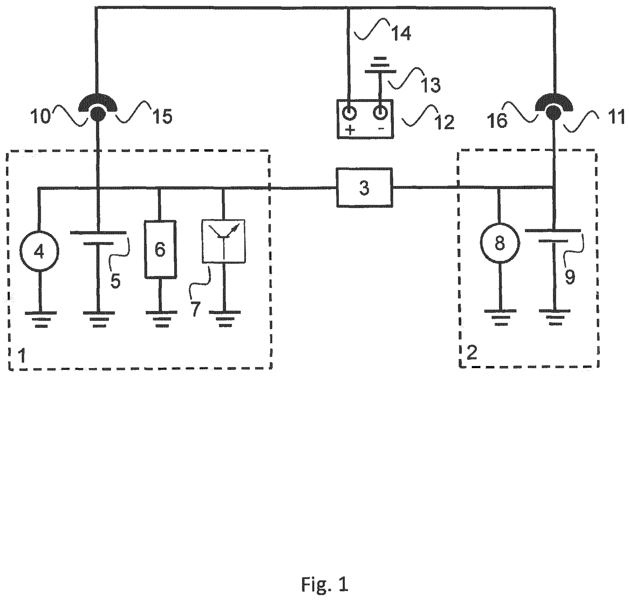

Fig. 1 zeigt schematisch die Topologie eines Bordnetzes eines Kraftfahrzeugs mit einem ersten Teilbordnetz, dem Basisbordnetz (1), mit einer Spannungslage von 14 Volt. Das Basisbordnetz weist einen von einem Verbrennungsmotor getriebenen Generator (4) auf, der elektrische Verbraucher (6) und insbesondere Steuergeräte wie das Motorsteuergerät (7) mit elektrischer Leistung versorgt und einen ersten elektrischen Energiespeicher (5) im Fahrbetrieb lädt. Der erste elektrische Energiespeicher wird als Bordnetzbatterie bezeichnet. Das Kraftfahrzeug verfügt über ein zweites Teilbordnetz, dem Zustartbordnetz (2), mit einem zweiten elektrischen Energiespeicher (9), der als Zustartbatterie, bezeichnet wird. Die Zustartbatterie versorgt den Starter (8) des Fahrzeugs mit elektrischer Leistung, um den Verbrennungsmotor anzulassen. Die Zustartbatterie wird vom Basisbordnetz geladen. Hierzu dient ein unidirektionaler Gleichstromwandler (3) in der Leistungsklasse von etwa 150 Watt, der vom Basisbordnetz versorgt wird. Folglich wird bei einer Ladespannung von circa 14 Volt die Zustartbatterie mit circa 10 Ampere geladen. Die Bordnetzbatterie und die Zustartbatterie können in Blei-Säure-Technologie ausgeführt sein.

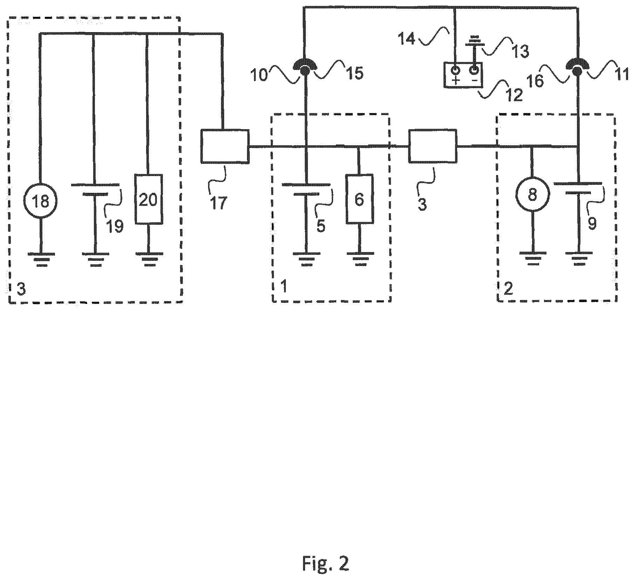

Fig. 2 zeigt das 14-Volt-Bordnetz eines Kraftfahrzeugs gemäß Fig. 1 mit einem zusätzlichen dritten Teilbordnetz (17). Es gelten die gleichen Bezugszeichen wie in Fig. 1. Das dritte Bordnetz ist ein Hochvolt-Bordnetz des Kraftfahrzeugs wie etwa eines Hybrid- oder Plug-in-Hybrid-Fahrzeugs. Das Hochvolt-Bordnetz weist einen Hochvolt-Speicher (20), beispielsweise in Lithium-lonen-Technologie, eine elektrische Antriebsmaschine (19) und Hochvolt-Verbraucher (21) auf. Das Hochvolt-Bordnetz ist über einen Hochvolt-Gleichstromsteller (18) elektrisch mit dem Basisbordnetz gekoppelt.

In Fig. 1 und Fig. 2 weist die Bordnetzbatterie einen ersten Fremdstartstützpunkt (10) an ihrer positiven Polarität und die Zustartbatterie einen zweiten Fremdstartstützpunkt (11) an ihrer positiven Polarität auf, die voneinander galvanisch getrennt sind. Müssen eine der beiden oder beide Batterien nachgeladen werden, zum Beispiel während der Produktion des Fahrzeugs, während eines Werkstattaufenthalts des Fahrzeugs oder nach einer langen Standzeit des Fahrzeugs, dient eine externe Stromquelle (12) als Lieferant elektrischer Leistung. Die externe Stromquelle kann etwa ein Ladegerät oder eine dritte Batterie sein. Mit einem Ladekabel (14), das als Plusleitung bezeichnet wird, wird ein Fremdstartstützpunkt mit dem Ausgang des Ladegeräts mit positivem Potential oder mit dem Pluspol der dritten Batterie elektrisch kontaktiert. Das Ladekabel weist eine parallele Verzweigung auf, so dass der erste Fremdstartstützpunkt mit einer ersten Klemme (15) oder ersten Zange und der zweite Fremdstartstützpunkt mit einer zweiten Klemme (16) oder zweiten Zange kontaktierbar ist. Eine Masseleitung verbindet den Ausgang des Ladegeräts mit negativem Potential oder den Minuspol der dritten Batterie mit der Masse des Fahrzeugs, an welche auch die Bordnetzbatterie und die Zustartbatterie gebunden sind. Mit dieser Fremdstarteinrichtung können die Bordnetzbatterie und die Zustartbatterie gleichzeitig mit einem Ladegerät geladen werden. Wahlweise kann auch nur die erste Klemme oder nur die zweite Klemme geschlossen werden. Ist nur die erste Klemme mit dem ersten Fremdstartstützpunkt verbunden, wird die Bordnetzbatterie geladen und das Motorsteuergerät und der unidirektionale Gleichstromwandler werden mit Betriebsspannung versorgt. Deshalb wird auch die Zustartbatterie über den Gleichstromwandler geladen, wobei der Gleichstromwandler den Fluss elektrischer Leistung limitiert. Ein Fahrzeugstart kann unter der Bedingung erfolgen, dass die Zustartbatterie den für einen Motorstart nötigen Ladezustand aufweist, um den für einen Motorstart hohen Startstrom bis 1 Kiloampere abzugeben. Bei tiefentladener Zustartbatterie kann ein Motorstart erst nach einer längeren Ladezeit der Zustartbatterie über den Gleichstromwandler erfolgen.

Ist nur die zweite Klemme mit dem zweiten Fremdstartstützpunkt verbunden, wird die Zustartbatterie geladen. Ein Motorstart des Fahrzeugs kann unter der Bedingung erfolgen, dass die Bordnetzbatterie ausreichend Ladezustand aufweist, um das Motorsteuergerät mit seiner Betriebsspannung zu versorgen und dass entweder die zu ladende Zustartbatterie oder die externe Stromquelle den für einen Motorstart nötigen Startstrom abzugeben. Falls sich die Bordnetzbatterie in einem tiefentladenen Zustand befindet, kann das Fahrzeug auch nach längerer Ladezeit mit nur angeschlossener zweiter Klemme nicht gestartet werden.

Sind die erste und die zweite Klemme an den jeweiligen Fremdstartstützpunkten angeschlossen, ist ein sofortiger Motorstart als Fremdstart unter der Bedingung durchführbar, dass die externe Stromquelle den für einen Motorstart nötigen Startstrom abgeben kann. Alternativ sind die erste und die zweite Klemme an jeweils zwei separaten Plusleitungen angebracht, so dass zwei externe Stromquellen für einen Fremdstart benutzt werden. Dann weist jede der beiden Stromquellen eine Masseleitung zum Fahrzeug auf.

### Bezugszeichenliste

- 1.: Basisbordnetz
- 2.: Zustartbordnetz
- 3.: Gleichstromwandler
- 4.: Generator
- 5.: Bordnetzbatterie
- 6.: Verbraucher
- 7.: Motorsteuergerät
- 8.: Starter
- 9.: Zustartbatterie
- 10.: erster Fremdstartstützpunkt
- 11.: zweiter Fremdstartstützpunkt
- 12.: externe Stromquelle
- 13.: Masseleitung
- 14.: Plusleitung
- 15.: erste Klemme
- 16.: zweite Klemme
- 17.: Hochvolt-Bordnetz
- 18.: Hochvolt-Gleichstromsteller
- 19.: Elektrische Maschine
- 20.: Hochvolt-Speicher
- 21.: Hochvolt-Verbraucher

## Patentansprüche

1. Fremdstartvorrichtung für ein Kraftfahrzeug, wobei das Kraftfahrzeug über ein Motorsteuergerät (7) und einen Starter (8) für einen Verbrennungsmotor verfügt, das Kraftfahrzeug mit mindestens zwei Teilbordnetzen (1,2), die über mindestens ein elektrisches Trennelement (3) miteinander gekoppelt sind, und je Teilbordnetz mit mindestens einem wiederaufladbaren elektrischen Energiespeicher (5,9) ausgestattet ist,
**dadurch gekennzeichnet,**
- **dass** mindestens zwei der Teilbordnetze einen Fremdstartstützpunkt (10,11) aufweisen und die Fremdstartstützpunkte galvanisch voneinander getrennt sind.

2. Fremdstartvorrichtung nach Anspruch 1,
**dadurch gekennzeichnet,**
**dass** elektrische Trennelement als Gleichstromwandler und/oder als Relais oder als Schalter ausgeführt ist.

3. Fremdstartvorrichtung nach einem der Ansprüche 1 oder 2
**dadurch gekennzeichnet,**
- **dass** die Fremdstartstützpunkte mit einer äußeren Stromquelle (12) über eine kabelgebundene Verbindung (14) elektrisch kontaktierbar sind, um die wiederaufladbaren elektrischen Energiespeicher zu laden.

4. Fremdstartvorrichtung nach Anspruch 3
**dadurch gekennzeichnet,**
- **dass** die kabelgebundene Verbindung mindestens zwei parallele Verzweigungen aufweist, um mindestens zwei der Energiespeicher mit dem gleichen elektrischen Potential zu laden.

5. Fremdstartvorrichtung nach einem der Ansprüche 1 bis 4
**dadurch gekennzeichnet,**
- **dass** mindestens zwei der Teilbordnetze über die Fremdstartstützpunkte mit einer äußeren Stromquelle elektrisch verbunden sind, um einen Fremdstart des Verbrennungsmotors durchzuführen.

## Claims

1. A jump start device for a motor vehicle, wherein the motor vehicle has an engine control unit (7) and a starter (8) for an internal combustion engine, and the motor vehicle is equipped with at least two vehicle electrical sub-systems (1, 2), which are coupled to one another by means of at least one electrical separation element (3), and each vehicle electrical sub-system is equipped with at least one rechargeable electrical energy storage device (5, 9),
**characterised in that**
- at least two of the vehicle electrical sub-systems have a jump start terminal point (10, 11) and the jump start terminal points are galvanically isolated from one another.

2. A jump start device according to claim 1,
**characterised in that**
the electrical separation element is embodied as a DC converter and/or as a relay or as a switch.

3. A jump start device according to either one of claims 1 or 2, **characterised in that**
- the jump start terminal points can be electrically contacted with an external power source (12) by means of a wired connection (14) in order to charge the rechargeable electrical energy store.

4. A jump start device according to claim 3,
**characterised in that**
- the wired connection has at least two parallel branches in order to charge at least two of the energy storage devices with the same electrical potential.

5. A jump start device according to any one of claims 1 to 4,
**characterised in that**
- at least two of the vehicle electrical sub-systems are electrically connected to an external power source by means of the jump start terminal points in order to carry out a jump start of the internal combustion engine.

## Revendications

1. Dispositif de démarrage externe d'un véhicule, ce véhicule étant équipé d'un appareil de commande motorisé (7) et d'un démarreur (8) d'un moteur à combustion interne, et le véhicule étant équipé d'au moins deux réseaux embarqués partiels (1, 2) qui sont couplés l'un à l'autre au moyen d'au moins un élément de séparation électrique (3), chaque réseau embarqué partiel étant équipé d'au moins un accumulateur d'énergie électrique (5, 9) rechargeable,
**caractérisé en ce qu'**
au moins deux des réseaux embarqués partiels comportent un point d'appui de démarrage externe (10, 11) et les points d'appui du démarrage externe sont galvaniquement séparés l'un de l'autre.

2. Dispositif de démarrage externe conforme à la revendication 1,
**caractérisé en ce que**
l'élément de séparation électrique est réalisé sous la forme d'un convertisseur à courant continu et/ou d'un relais et/ou d'un commutateur.

3. Dispositif de démarrage externe conforme à l'une des revendications 1 et 2,
**caractérisé en ce que**
les points d'appui du démarrage externe sont susceptibles d'être mis en contact électrique avec une source de courant externe (12) par l'intermédiaire d'une liaison filaire (14) pour permettre de charger les accumulateurs d'énergie électrique rechargeables.

4. Dispositif de démarrage externe conforme à la revendication 3,
**caractérisé en ce que**
la liaison filaire comporte au moins deux branches parallèles pour permettre de charger au moins deux des accumulateurs d'énergie avec le même potentiel électrique.

5. Dispositif de démarrage externe conforme à l'une des revendications 1 à 4,
**caractérisé en ce qu'**
au moins deux des réseaux embarqués sont reliés électriquement à une source de courant externe par l'intermédiaire des points d'appui du démarrage externe pour permettre d'effectuer un démarrage externe du moteur à combustion interne.
